# EUROPEAN PATENT APPLICATION

(11) **EP 3 399 296 A1**
(43) Date of publication of application: **07.11.2018**
(21) Application number: 17837839.4
(22) Date of filing: 04.08.2017
(51) Int. Cl.: G01M 3/16

(54) **REAL-TIME AMMONIA LEAK DETECTION AND PROCESSING METHOD FOR SMALL AMMONIA REFRIGERATION DIFFUSION-ABSORPTION REFRIGERATING APPARATUS DEDICATED TO REFRIGERATOR OR WINE CABINET OR REFRIGERATED CONTAINER**

(30) Priority: 02.03.2017 CN 201710118783
(71) Applicant: Foshan Wellway Electric Appliance Co., Ltd, Shunde Foshan City Guangdong 528000 (CN)
(72) Inventor: ZHIJIAN, Zhou, Foshan Guangdong 528000 (CN); PENG, Wen, Foshan City, Guangdong 528000 (CN)
(74) Representative: Sun, Yiming
(86) International application number: PCT/CN2017/096071
(87) International publication number: WO 2018/157552

(57) **Abstract**

A method for real-time detecting and dealing with ammonia leakage of a mini diffusion-absorption ammonia refrigerating apparatus used for refrigerators, wine cabinets or freezers comprising a main container body; the rear portion of the main container body is provided with a mini diffusion-absorption ammonia refrigerating apparatus; at least one high-sensitivity ammonia sensor is disposed in the refrigerating apparatus; the ammonia sensor is connected to a control panel; after detecting the concentration of ammonia gas, collecting and processing the data, many means can be initiated to prevent ammonia gas from being leaked, achieving a precise judgement and an effective treatment.

## Description

### TECHNICAL FIELD OF THE INVENTION

The present invention relates to the technical field of rapidly detecting ammonia gas, and more particularly, to a method for real-time detecting and dealing with ammonia leakage of a mini diffusion-absorption ammonia refrigerating apparatus used for refrigerators, wine cabinets or freezers.

### BACKGROUND OF THE INVENTION

Ammonia, a compound of nitrogen and hydrogen with the formula NH₃, is a colorless gas with a distinctively pungent smell. It is lighter than air--its density is 0.5971 times that of air. The strong hydrogen bonding between molecules make it easily liquefied into a colorless liquid after being pressurized at a normal temperature (the critical temperature is 132.4°C, and the critical pressure is 11.2 MPa, namely, 112.2 atmospheres of pressure). The liquid boils at -33.5 °C, and freezes at -77.75 °C to white crystals. Ammonia can be dissolved in water, ethyl alcohol and diethyl ether, and can be decomposed into nitrogen and hydrogen at a high temperature. When catalysts exist, it can be oxidized into nitric oxide. Meanwhile, ammonia can be directly synthesized from nitrogen and hydrogen, and can be used to manufacture liquid nitrogen, ammonia liquor, nitric acid, ammonium salt and amine substances, etc. Ammonia also can burn people's skin, eyes an the mucosa of respiratory organs. Even worse, excessive inhalation of ammonia gas can cause lung swelling and death.

In the prior art, the core refrigerating component of a traditional small-sized diffusion-absorption ammonia refrigerating apparatus used for refrigerators and wine cabinets (hereinafter called refrigerating apparatuses) possess many soldering points. Consequently, problems such as chronic leakage and seepage can easily happen to these soldering points during manufacturing and use. Some can even lead to a large amount of ammonia leakage. Meanwhile, the strong smell of ammonia can do great harm to people's health and severely pollute the environment.

The traditional refrigerating apparatuses sold on the market can neither precisely detect the ammonia concentration in the air, nor deal with the ammonia leakage. They can merely be used to detect and judge a leakage according to the variation of the refrigerating performance when the refrigerant in the refrigerating apparatus is excessively leaked. Thus, such detection and judgement can be seriously delayed, resulting in a poor consistency and a low reliability.

### SUMMARY OF THE INVENTION

The purpose of the present invention is to solve the shortcomings in the prior art and provide a method for real-time detecting and deal with ammonia leakage of a mini diffusion-absorption ammonia refrigerating apparatus used for refrigerators, wine cabinets or freezers. The present invention has a reasonable structure and can solve the prior technical problems.

To achieve the above purpose, the present invention adopts the following technical solution:
A method for real-time detecting and dealing with ammonia leakage of a mini diffusion-absorption ammonia refrigerating apparatus used for refrigerators, wine cabinets or freezers comprising a main container body; the rear portion of the main container body is provided with a mini diffusion-absorption ammonia refrigerating apparatus; at least one high-sensitivity ammonia sensor is disposed in the refrigerating apparatus; the ammonia sensor is connected to a control panel; the control panel is provided with a container body temperature probe and a wireless/wire communication module; the control panel, which is connected to an alarm flashlight, is connected to a buzzer.

The method for real-time detecting and dealing with ammonia leakage of a mini diffusion-absorption ammonia refrigerating apparatus used for refrigerators, wine cabinets or freezers, comprising the steps of:
Step 1: initiating the diffusion-absorption ammonia refrigerating apparatus, thereby starting the refrigerating cycle; thus, the machine can work smoothly;
Step 2: detecting ammonia molecules through the high-sensitivity ammonia sensor disposed in the refrigerating apparatus once ammonia leakage happens during normal operation; ammonia molecules move upwardly due to its density being lower than that of air, which can be precisely detected by the high-sensitivity ammonia sensor; subsequently, the high-sensitivity ammonia sensor outputs different electrical parameters according to various ammonia concentrations; after being processed by the circuit, the electrical parameters are enabled to correspond to various concentrations in the environment;
Step 3: dealing with the leakage according to various concentrations:
   a. continuing working;
   b. stopping refrigeration and sending an alarm signal to the control terminal when a small amount of ammonia leakage is detected;
   c. stopping refrigeration, flashing the alarm-light, and sending an alarm signal to the control terminal when a higher amount of ammonia leakage is detected;
   d. stopping refrigeration, flashing the alarm-light, sound alarming, and sending an alarm signal to the control terminal when a large amount of ammonia leakage is detected; such an alarm signal can be immediately received by the control terminal, thereby enabling the machine to be maintained in time.

In another preferred embodiment, the high-sensitivity ammonia sensor is a complementary metal oxide semiconductor chip ammonia sensor, and a nanometer thin film gas sensitive material is disposed in the high-sensitivity ammonia sensor.

In another preferred embodiment, the nanometer thin film gas sensitive material is one or a compound of thin films selecting from a tin dioxide nanometer thin film, a copper phthalo-cyanine thin film, and a copper phthalo-cyanine/tin dioxide composite thin film.

In another preferred embodiment, the film-forming particles of the nanometer thin film gas sensitive material have a uniform size of 1-5nm.

In another preferred embodiment, the wireless/wire communication module comprises a SD card slot, a modem, a battery, a micro-processor, and a ROM. When the concentration of ammonia leakage detected by the high-sensitivity ammonia sensor reaches a set value, the communication module can be automatically connected to the wireless network, thereby calling a preset phone number or calling the duty room.

In another preferred embodiment, nickel element contained in the nanometer thin film gas sensitive material is at 1-50%.

In another preferred embodiment, aluminum element contained in the nanometer thin film gas sensitive material is at 1-50%.

In another preferred embodiment, cobalt element contained in the nanometer thin film gas sensitive material is at 1-50%. The crystal structure of tin dioxide (SnO₂) is not changed by cobalt ions doped therein, achieving a high sensitivity and a quick response-recovery performance to the gas to be detected.

In another preferred embodiment, nickel-cobalt alloy powder doped in the nanometer thin film gas sensitive material is at 1-50%.

In another preferred embodiment, graphene element contained in the nanometer thin film gas sensitive material is at 1-50%.

Compared with the prior art, the present invention has the following advantages:
The ammonia gas detection method of the present invention is specially designed for a drawer-type mini diffusion-absorption ammonia refrigerating apparatus, which has a reasonable structure and is properly arranged. Meanwhile, after detecting the concentration of ammonia gas, collecting and processing the data, many means can be initiated to prevent ammonia gas from being leaked, achieving a precise judgement and an effective treatment. The detection accuracy can reach 0.01 ppm. Once the concentration exceeds the standard value, it can be precisely detected. Meanwhile, the judging results can be easily displayed, greatly improving the visual degree. Furthermore, the concentration that needs to be detected and controlled, and related processing ways can be set during the detection process according to the requirements of detecting accuracy. Furthermore, the quantity of the ammonia sensors is not restricted, which is suitable for a large-scale application. Meanwhile, errors made by a single ammonia concentration detecting apparatus can be avoided.

### BRIEF DESCRIPTION OF THE DRAWINGS

To clearly expound the present invention or technical solution, the drawings and embodiments are hereinafter combined to illustrate the present invention. Obviously, the drawings are merely some embodiments of the present invention and those skilled in the art can associate themselves with other drawings without paying creative labor.

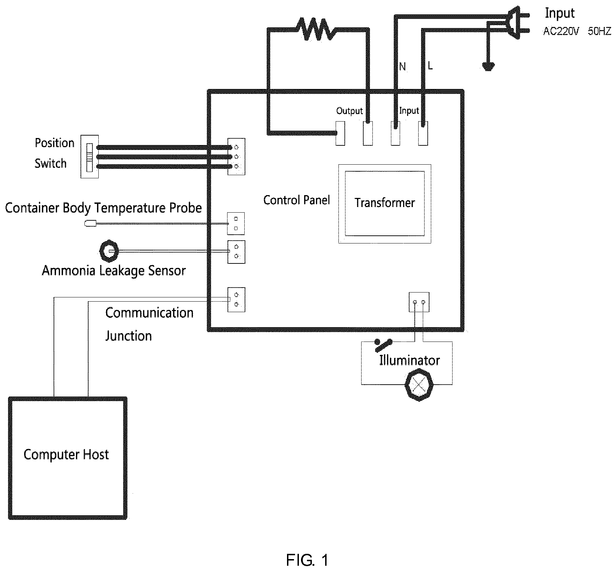

Figure 1 is a principle diagram of the method for real-time detecting and dealing with ammonia leakage of a mini diffusion-absorption ammonia refrigerating apparatus used for refrigerators, wine cabinets or freezers.

### DETAILED DESCRIPTION OF THE INVENTION

Drawings and detailed embodiments are combined hereinafter to elaborate the technical principles of the present invention.

A method for real-time detecting and dealing with ammonia leakage of a mini diffusion-absorption ammonia refrigerating apparatus used for refrigerators, wine cabinets or freezers comprising a main container body; the rear portion of the main container body is provided with a mini diffusion-absorption ammonia refrigerating apparatus; at least one high-sensitivity ammonia sensor is disposed in the refrigerating apparatus; the ammonia sensor is connected to a control panel; the control panel is provided with a container body temperature probe and a wireless/wire communication module; the control panel, which is connected to an alarm flashlight, is connected to a buzzer.

The method for real-time detecting and dealing with ammonia leakage of a mini diffusion-absorption ammonia refrigerating apparatus used for refrigerators, wine cabinets or freezers, comprising the steps of:
Step 1: initiating the diffusion-absorption ammonia refrigerating apparatus, thereby starting the refrigerating cycle; thus, the machine can work smoothly;
Step 2: detecting ammonia molecules through the high-sensitivity ammonia sensor disposed in the refrigerating apparatus once ammonia leakage happens during the normal running; ammonia molecules move upwardly due to its density being lower than that of air, which can be precisely detected by the high-sensitivity ammonia sensor; subsequently, the high-sensitivity ammonia sensor outputs different electrical parameters according to various ammonia concentrations; after being processed by the circuit, the electrical parameters are enabled to correspond to various concentrations of ammonia gas in the environment;
Step 3: dealing with the leakage according to various concentrations of the ammonia gas:
   a. continuing working when the concentration being detected is lower than 20PPM;
   b. stopping refrigeration and sending an alarm signal to the control terminal when a small amount of ammonia leakage that has a concentration higher than 20PPM is detected;
   c. stopping refrigeration, flashing the alarm-light, and sending an alarm signal to the control terminal when a higher amount of ammonia leakage that has a concentration higher than 20PPM is detected, wherein the concentration of ammonia gas is higher than a value that can discomfort human bodies after a long term;
   d. stopping refrigeration, flashing the alarm-light, sounding an alarm, and sending an alarm signal to the control terminal when a large amount of ammonia leakage that has a concentration higher than 20PPM is detected, wherein the concentration of ammonia gas is higher than a value that can discomfort human bodies after a short term;

The concentration of each grade can be adjusted within a range of 0.1-1000PPM (the effective working range of the sensor) according to actual requirements.

Once a problem occurs, the alarm signal can be immediately received by the control terminal, thereby enabling the machine to be timely maintained.

The high-sensitivity ammonia sensor is a complementary metal oxide semiconductor chip ammonia sensor, and a nanometer thin film gas sensitive material is disposed in the high-sensitivity ammonia sensor.

The nanometer thin film gas sensitive material is one or a compound of thin films selecting from a tin dioxide nanometer thin film, a copper phthalo-cyanine thin film, and a copper phthalo-cyanine/tin dioxide composite thin film.

The film-forming particles of the nanometer thin film gas sensitive material have a uniform size of 1-5nm.

The wireless/wire communication module comprises a SD card slot, a modem, a battery, a micro-processor, and a ROM. When the concentration of the ammonia leakage detected by the high-sensitivity ammonia sensor reaches a set value, the communication module can be automatically connected to the wireless network, thereby calling a preset phone number or calling the duty room.

Nickel element contained in the nanometer thin film gas sensitive material is at 1-50%.

Aluminum element contained in the nanometer thin film gas sensitive material is at 1-50%.

Cobalt element contained in the nanometer thin film gas sensitive material is at 1-50%. The crystal structure of tin dioxide (SnO₂) is not altered by cobalt ions doped therein, achieving a high sensitivity and a quick response-recovery performance to the gas to be detected.

Nickel-cobalt alloy powder doped in the nanometer thin film gas sensitive material is at 1-50%.

Graphene element contained in the nanometer thin film gas sensitive material is at 1-50%.

The principle of the present invention is explained hereinafter:
The gas sensitive material adopted in the high-sensitivity ammonia sensor is tin dioxide (SnO₂), which has a low electric conductivity in clean air. When the concentration of ammonia in the air becomes denser, the electric conductivity of the sensor increases accordingly, which can be converted into an output signal corresponding to the concentration of the ammonia gas through a simple electric circuit.

A gas sensor made from tin dioxide has high sensitivity, long functional life, high stability, high corrosion resistance, a simple structure, low cost and excellent mechanical properties, which is capable of directly outputting electric signals. Thus, it has been widely applied in many fields in recent decades. With the rapid development of related technologies, the market demands gas sensors having higher gas-sensitive performance, smaller size and higher integration level. In order to achieve the above purposes, thin film gas sensors have become the focus of researches.

To further improve the sensitivity of the nanometer thin film gas sensitive material to ammonia, and to decrease the working temperature of the gas sensitive thin film, three metal oxide semiconductors including nickel, aluminum and cobalt oxide semiconductors, and non-metal materials such as graphene are doped into tin dioxide. Testing results show that the sensitivity of the nanometer thin film gas sensitive material to ammonia can be greatly improved after being doped with 10% of nickel, aluminum and cobalt oxide semiconductors. Meanwhile, the optimum working temperature of the gas sensitive thin film can be significantly increased. The doping amount of the metal oxide semiconductors can affect the sensitivity of the nanometer thin film gas sensitive material to ammonia.

The three oxide semiconductors including nickel, aluminum and cobalt oxide semiconductors, and the non-metal material such as graphene doped therein can change the initial resistance of the nanometer thin film gas sensitive material. The above materials can form a solid solution, of which the crystal lattice can be converted with the increase of the metal materials melted into the solution. Meanwhile, the specific surface area can be enlarged, and the quantity of oxide ions absorbed on the surface can be increased. Furthermore, with the increase of doping amount, the impurity ions also enhance the heat dissipation of carriers, thereby affecting the mobility ratio of carriers. Thus, the accuracy of detecting ammonia gas can be greatly improved.

### Application of Nanomaterials in Ammonia Gas Detection

Materials with structure at the nanoscale often have unique optical, electronic, or mechanical properties, which can be widely used in detecting ammonia gas. The advantages of nanomaterials are specified hereinafter to prove the novelty and creativity of using nanomaterials in the present invention:

### Nanometer Effect

When the size of a substance is decreased to a certain degree, its behavior can merely be described by quantum mechanics instead of the traditional mechanics. For instance, when the size of a powder particle is decreased from 10 microns to 10 nanometers, its volume is decreased by 10⁹ times although its particle size is merely decreased by 1000 times. Thus, the behaviors of the above two can be distinctly different.

The nanometer particle is different from a block material because its surface area is comparatively increased. Namely, the surface of the ultrafine particle is covered with a step-like structure. Such a structure represents unstable atoms having a high surface energy. These atoms can easily form a bonding with external atoms. Meanwhile, active atoms having a large surface area can be provided with the decreased of particle size.

The surface atoms in the nanometer powder remain in an unstable state. Thus, the surface crystal lattice of the surface atoms has greater amplitude of vibration, providing a higher surface energy to the surface atoms. Therefore, the unique thermal properties of the ultrafine particles can be formed. Namely, the melting point of the ultrafine particles can be decreased. Meanwhile, compared with traditional powders, nanometer powders can be easily sintered at a lower temperature, which is an excellent material capable of promoting the sintering process.

A common magnetic substance has a plurality of magnetic regions. However, when the particle size is too small to be distinguished, a magnetic substance having a single magnetic region can be formed. Thus, ultrafine particles or thin films made from such a magnetic material have excellent magnetic properties.

The diameter of nanometer particles is in a range of 10-100 nanometers, which is less than the length of an optical wave. Therefore, nanometer particles can interact with the incident light in a complex manner. Under proper evaporative and depositional conditions, metals can obtain black metal ultrafine particles capable of easily absorbing light (namely, the metallic black), which can form a strong contrast with the high-reflectivity glossy metal surface formed during the vacuum coating process. Due to its high light-absorptivity, nanomaterials can be widely applied to many infrared ray sensing materials.

Nanomaterials are powders, fibers, films, or blocks with a structure at the nanoscale. Scientific tests have shown that when a material remaining in a normal state is processed into an extremely fine nanoscale material, special surface effect, volume effect and quantum effect of this material can appear. Furthermore, the optical, thermal, electrical, mechanical and even chemical properties can be significantly changed. Thus, nanomaterials possess many excellent performances that common materials do not have, which can be widely used in many fields such as electronics, medicine, chemical engineering, military and aerospace, etc. Consequently, nanomaterials play a key role in research and application of new materials.

Nanomaterials can be roughly divided into four categories including nanometer powder, nanometer fiber, nanometer film and nanometer block, wherein nanometer powder is the first developed and its technology is the most mature one, which is the basis of the other three.

### Nano-powders

Nano-powders are also called ultra-micro powders or ultrafine powders, which are powers or particles less than 100nm in size. It is a solid particle material having a physical state in the middle of atoms, molecules and macroscopic objects. Nano-powders can be widely used in high-density magnetic recording materials, wave-absorbing stealth materials, magnetic fluid materials, radiation protection materials, mono-crystalline silicon and precision optics polishing materials, microchip heat-conducting substrates and wiring materials, microelectronic packaging materials, optoelectronic materials, advanced battery electrode materials, solar cell materials, high-performance catalysts, high-performance combustion improvers, sensitive components, high-tenacity ceramic materials (ceramics that can not be broken, and can be used for ceramic engines), body-repairing materials and anti-tumor compositions, etc.

### Nano-fibers

Nano-fibers are fibers with diameters in the nanometer range, which can be used in micro-wire materials, micro-fiber materials (an important component for quantum computers and photon computers in future), new laser materials or light-emitting diode materials.

### Nano-films

Nano-films can be divided into granular films and dense films. A granular film is a tiny thin film existing in between nanometer granules that are bonded together. A dense film is a thin film having dense film layers and nanoscale crystalline grains, which can be used in gas catalytic materials (e.g., vehicle exhaust treatment materials), filtering materials, high-density magnetic recording materials, photosensitive materials, two-dimensional display materials and superconducting materials, etc.

### Nano-blocks

Nano-blocks are nanometer crystal materials obtained by dealing with nanometer powder in a high-pressure forming process, or by controlling the crystallization of metal liquids, which are mainly used in ultra-high strength materials and intelligent metal materials, etc.

From a scientific viewpoint, there still remains a vast unknown territory of nanomaterials to humans. The unique properties of nanomaterials discovered in scientific experiments show a very rich potential research field, meaning that the development of nanomaterials can provide unprecedented useful materials to mankind.

### Surface Effect

The surface area of a spherical particle is proportional with the square of its diameter, and its volume is proportional with the cube of its diameter. Thus, its specific surface area (surface area/volume) is inversely proportional with its diameter. Along with the decrease of the particle diameter, the specific surface area is greatly increased, meaning that the percentage of surface atoms is significantly increased. The surface effect of those particles having a diameter greater than 0.1 micron can be ignored. However, when the particle diameter is lower than 0.1 micron, the percentage of the surface atoms can be sharply increased. Even the sum of the surface areas of 1 gram of ultrafine particles can reach 100 square meters. At this moment, the surface effect cannot be ignored.

The surface of an ultrafine particle is distinctly different from that of a block object. When videotaping the metal ultrafine particles having a diameter of 2*10^-3 microns via a high magnification electron microscope, it can be found that these particles have no definite shape, and can automatically form various shapes (e.g., cubo-octahedron, decahedron, icosahedron and polysynthetic twinning crystal, etc.) along the change of time. It's a quasi-solid different from common solids and liquids. Under being irradiated by electron beams of an electron microscope, the surface atoms seem to enter into a "boiling" state. Such instability of the particle structure can disappear after the particle size becomes greater than 10 nanometers. At this moment, the micro-particles possess a stable structure. The surface of the ultrafine particles has a high activity. Thus, metal particles in the air can be rapidly oxidized and burnt. To prevent spontaneous combustion from happening, the surface can be covered and the oxidation rate can be controlled, which enables a layer of thin and dense oxidation layer to be generated through a slow oxidation process. Thus, the surface stabilization can be ensured. Through utilizing the surface activity, ultrafine metal particles can become a new highly-efficient catalyst, an air-storage material, and a low melting-point material.

### Small-size Effect

With the quantitative change of the particle diameter, the qualitative change of granular properties can be caused under a certain condition. The macroscopic change of physical properties caused by the decrease of particle diameter is called small size effect. For ultrafine particles, the specific surface area can be significantly increased along the decrease of the particle size. Thus, a lot of new properties can appear accordingly.

### Optical Properties

When gold is divided into a size smaller than the wavelength of light, its rich luster can disappear. In fact, all of the metals can appear black in an ultrafine particle state. A smaller size can appear darker. For instance, silver platinum can turn into platinum black, and chromium metal can turn into chrome black. Thus, it can be seen that the metal ultrafine particles have a low reflectivity to light, which is usually lower than 1%. Thus, the light can be completely eliminated by few microns. Such a property can be utilized to manufacture highly-efficient photo-thermal and photo-electric conversion materials. Meanwhile, it can be used to efficiently convert solar energy into thermal energy and electric energy, and can be applied to infrared sensitive components and infrared stealth technology, etc.

### Thermal Properties

When a solid substance has a large size, its melting point is fixed. However, its melting point can be significantly decreased after being ultra-micronized, which is more obvious when the particle size is lower than 10 nanometers. For instance, the regular melting point of gold is 1064C°C, which can be decreased by 27°C when the particle size is decreased to be lower than 10 nanometers. Its melting point is merely 327°C when the particle size is 2 nanometers. The regular melting point of silver is 670°C, but the melting point of ultrafine silver particles can be lower than 100°C. Thus, conductive slurries made from ultrafine silver powder can be sintered at a lower temperature. In such a circumstance, it's no longer necessary to adopt a high temperature resistant ceramic material as the substrate of components. Even plastics can be used as the substrate. Adopting ultrafine silver powder slurries can achieve a uniform film thickness and a large covering area, which is material-saving and highly-qualified. Kawasaki Steel Corporation in Japan replaces precious metals such as palladium and sliver by conductive slurries made from copper and nickel ultrafine particles having a size of 0.1-1 micron. The property that the melting point of ultrafine particles can be decreased is very attractive to the powder metallurgy industry. For instance, after doping ultrafine nickel particles having a weight ratio of 0.1 %-0.5% into tungsten particles, the sintering temperature can be decreased from 3000°C to 1200∼ 1300°C, enabling the substrates of high power semiconductor tubes to be sintered at a low temperature.

### Magnetic Properties

Ultrafine magnetic particles were found in organisms such as doves, dolphins, butterflies, bees, and magneto-tactic bacteria living in water, which enables them to navigate the route under the guidance of the earth's magnetic field. Consequently, such organisms possess the ability to return. Magnetic ultrafine particles are essentially a biological magnetic compass, through which magneto-tactic bacteria living in water can swim to the nutritious water bottom. After studying this phenomenon via an electron microscope, it is found that magnetic oxide particles having a diameter of about 2'10⁻² microns are usually contained in magneto-tactic bacteria. The magnetic properties of small-sized particles are remarkably different from those of bulk materials. The coercive force of a pure-iron bulk is about 80 A/m. When the particle size is decreased lower than 2'10⁻² microns, the coercive force can be increased by 1000 times. However, when the particle size is further decreased to be lower than 6'10⁻³ microns, the coercive force is reduced to zero, thereby showing a super-paramagnetic property. Due to the high coercive force of magnetic ultrafine particles, they can be used in magnetic recording magnetic powders having a high storage density. Furthermore, magnetic ultrafine particles are widely applied in magnetic tapes, magnetic disks, magnetic cards and magnetic keys, etc. According to its super-paramagnetic property, magnetic ultrafine particles can be made into magnetic liquids that can be widely utilized.

### Nanometer Effect

Ceramic materials are fragile in general. However, nanometer ceramic materials made from nanometer particles possess a good strength. Due to the large surface of nanomaterials, the surface atoms are randomly arranged. These atoms can be easily deformed to migrate under the action of an external force, thereby showing good ductility and tenacity. Thus, nanometer ceramic materials possess novel mechanical properties. American scholars have reported that calcium fluoride nanomaterials can be bent without being broken at the room temperature. Studies show that human teeth have a high strength because they're made from nanometer materials such as calcium phosphate. Nano-crystalline grained metals are 3-5 times harder than traditional coarse grained metals. As for metal, ceramic and other composite nanomaterials, the mechanical properties of them can be altered to a larger range, and their application prospects are very broad. The small size effect of ultrafine particles is also manifested in superconductive, dielectric, acoustic and chemical properties.

### Tunnel Effect

Atoms of each element have a specific spectrum line. For instance, a sodium atom has a yellow spectrum line. It is reasonably elaborated by atomic model and quantum mechanics with the concept of energy levels. When a solid substance is composed of numerous atoms, the energy levels of the individual atoms are combined to form an energy band. Due to the large number of electrons, the space between the energy levels of the energy band is very small, enabling the energy band to appear continuous. The relation and difference among bulk metals, semiconductors and insulators are reasonably explained from the energy band theory. For ultrafine particles existing among atoms, molecules and bulk solids, the continuous energy band in the bulk material can be split into independent energy levels, and the space between the energy levels can increase with the decrease of the particle size. When thermal energy, electric field energy, or magnetic field energy are lower than the average space between energy levels, a series of anomalous properties that are distinct from macroscopic objects can appear, which is called quantum size effect. For instance, the conductive metal in superfine particles can become an insulator. The magnetic torque is determined by an even or odd number of electrons in the particle. The specific heat changes abnormally, and the spectrum lines move towards the direction of the short wavelength, which is the macroscopic expression of quantum size effect. Therefore, quantum effect must be considered when ultrafine particles stay in a low temperature, and the original macroscopic rule is no longer established. Electrons have both particle properties and wave properties, which is the basis of tunnel effect. It is found that some macroscopic physical quantities such as the magnetization of micro particles and magnetic flux in quantum coherent devices also show the tunnel effect, which is called macroscopic quantum tunnel effect. Quantum size effect and macroscopic quantum tunnel effect are the basis for future microelectronics and optoelectronic devices, or the limits of the miniaturization of existing microelectronic devices are defined by them. The quantum effect must be taken into account when micro electronic devices are further miniaturized. For instance, in the manufacturing process of semiconductor integrated circuits, when the circuit size is close to the electronic wavelength, the electrons can overflow from the device according to the tunnel effect. Consequently, the device cannot work properly. The limit size of a classical circuit is about 0.25 micron. The newly-developed quantum resonant tunnel transistor is a new generation of devices utilizing the quantum effect.

The present invention adopts an open-type grading porous nanometer material, of which the accuracy can reach 1 nanometer. After combining with the properties of nanometer materials, its accuracy and sensitivity can be greatly improved.

The description of above embodiments allows those skilled in the art to realize or use the present invention. Without departing from the spirit and essence of the present invention, those skilled in the art can combine, change or modify correspondingly according to the present invention. Therefore, the protective range of the present invention should not be limited to the embodiments above but conform to the widest protective range which is consistent with the principles and innovative characteristics of the present invention. Although some special terms are used in the description of the present invention, the scope of the invention should not necessarily be limited by this description. The scope of the present invention is defined by the claims.

## Claims

1. A method for real-time detecting and managing of ammonia leakage of a mini diffusion-absorption ammonia refrigerating apparatus used for refrigerators, wine cabinets or freezers, comprising:
a main container body, wherein the rear portion of the main container body is provided with a mini diffusion-absorption ammonia refrigerating apparatus, wherein at least one high-sensitivity ammonia sensor is disposed in the refrigerating apparatus, wherein the ammonia sensor is connected to a control panel, wherein the control panel is provided with a container body temperature probe and a wireless/wire communication module, wherein the control panel, which is connected to an alarm flashlight, is connected to a buzzer, wherein the method for real-time detecting and dealing with ammonia leakage of a mini diffusion-absorption ammonia refrigerating apparatus used for refrigerators, wine cabinets or freezers, comprising the steps of:
Step 1: initiating the diffusion-absorption ammonia refrigerating apparatus, thereby starting the refrigerating cycle; thus, the machine can work smoothly;
Step 2: detecting ammonia molecules through the high-sensitivity ammonia sensor disposed in the refrigerating apparatus once ammonia leakage happens during the normal running; ammonia molecules move upwardly due to its density being lower than that of air, which can be precisely detected by the high-sensitivity ammonia sensor; subsequently, the high-sensitivity ammonia sensor outputs different electrical parameters according to various ammonia concentrations; after being processed by the circuit, the electrical parameters are enabled to correspond to various concentrations in the environment;
Step 3: dealing with the leakage according to various concentrations:
a. continuing working;
b. stopping refrigeration and sending an alarm signal to the control terminal when a small amount of ammonia leakage is detected;
c. stopping refrigeration, flashing the alarm-light, and sending an alarm signal to the control terminal when a higher amount of ammonia leakage is detected;
d. stopping refrigeration, flashing the alarm-light, sound alarming, and sending an alarm signal to the control terminal when a large amount of ammonia leakage is detected; such an alarm signal can be immediately received by the control terminal, thereby enabling the machine to be maintained in time.

2. The method for real-time detecting and dealing with ammonia leakage of a mini diffusion-absorption ammonia refrigerating apparatus used for refrigerators, wine cabinets or freezers of claim 1, wherein the high-sensitivity ammonia sensor is a complementary metal oxide semiconductor chip ammonia sensor, and a nanometer thin film gas sensitive material is disposed in the high-sensitivity ammonia sensor.

3. The method for real-time detecting and dealing with ammonia leakage of a mini diffusion-absorption ammonia refrigerating apparatus used for refrigerators, wine cabinets or freezers of claim 2, wherein the nanometer thin film gas sensitive material is one or a compound of thin films selecting from a tin dioxide nanometer thin film, a copper phthalo-cyanine thin film, and a copper phthalo-cyanine/tin dioxide composite thin film.

4. The method for real-time detecting and dealing with ammonia leakage of a mini diffusion-absorption ammonia refrigerating apparatus used for refrigerators, wine cabinets or freezers of claim 2 or 3, wherein the film-forming particles of the nanometer thin film gas sensitive material have a uniform size of 1-5nm.

5. The method for real-time detecting and dealing with ammonia leakage of a mini diffusion-absorption ammonia refrigerating apparatus used for refrigerators, wine cabinets or freezers of claim 1, wherein the wireless/wire communication module comprises a SD card slot, a modem, a battery, a micro-processor, and a ROM, wherein when the concentration of ammonia leakage detected by the high-sensitivity ammonia sensor reaches a set value, the communication module can be automatically connected to the wireless network, thereby calling a preset phone number or calling the duty room.

6. The method for real-time detecting and dealing with ammonia leakage of a mini diffusion-absorption ammonia refrigerating apparatus used for refrigerators, wine cabinets or freezers of claim 2, wherein nickel element contained in the nanometer thin film gas sensitive material is at 1-50%.

7. The method for real-time detecting and dealing with ammonia leakage of a mini diffusion-absorption ammonia refrigerating apparatus used for refrigerators, wine cabinets or freezers of claim 2, wherein aluminum element contained in the nanometer thin film gas sensitive material is at 1-50%.

8. The method for real-time detecting and dealing with ammonia leakage of a mini diffusion-absorption ammonia refrigerating apparatus used for refrigerators, wine cabinets or freezers of claim 2, wherein cobalt element contained in the nanometer thin film gas sensitive material is at 1-50%, wherein the crystal structure of tin dioxide (SnO₂) is not changed by cobalt ions doped therein, achieving a high sensitivity and a quick response-recovery performance to the gas to be detected.

9. The method for real-time detecting and dealing with ammonia leakage of a mini diffusion-absorption ammonia refrigerating apparatus used for refrigerators, wine cabinets or freezers of claims 6-8, wherein nickel-cobalt alloy powder doped in the nanometer thin film gas sensitive material is at 1-50%.

10. The method for real-time detecting and dealing with ammonia leakage of a mini diffusion-absorption ammonia refrigerating apparatus used for refrigerators, wine cabinets or freezers of claim 2, wherein graphene element contained in the nanometer thin film gas sensitive material is at 1-50%.
